Europäisches Patentamt

(19) European Patent Office

Office européen des brevets

(11) Numéro de publication: **0 233 107**
**B1**

(12) **FASCICULE DE BREVET EUROPEEN**

(45) Date de publication du fascicule du brevet: **22.08.90**

(21) Numéro de dépôt: **87400128.2**

(22) Date de dépôt: **20.01.87**

(51) Int. Cl.⁵: **B 29 C 37/00** // B29K105:08, B29K103:04

(54) **Procédé de revêtement, par produit réfractaire et/ou métallique, de pièces en matériau composite.**

(30) Priorité: **21.01.86 FR 8600749**

(43) Date de publication de la demande:
**19.08.87 Bulletin 87/34**

(45) Mention de la délivrance du brevet:
**22.08.90 Bulletin 90/34**

(84) Etats contractants désignés:
**DE GB**

(56) Documents cités:
**EP-A-0 117 838**
**DE-A-3 101 599**
**FR-A-2 180 676**
**NL-C- 80 082**
**US-E- 28 068**

(73) Titulaire: **R. ALKAN & Cie.**
**Rue du 8 mai 1945**
**F-94460 Valenton (FR)**

(72) Inventeur: **Mattei, Jean-Pierre**
**11 bis, rue Chevalier**
**F-94210 La Varenne (FR)**
Inventeur: **Coutin, Pierre**
**117, avenue Général Michel Bizot**
**F-75012 Paris (FR)**

(74) Mandataire: **Hud, Robert**
**Cabinet COLLIGNON 6, rue de Madrid**
**F-75008 Paris (FR)**

Courier Press, Leamington Spa, England.

**Description**

La présente invention concerne un procédé d'application, sur des pièces en matériau composite fibres-résine, d'un revêtement de produit réfractaire et/ou métallique.

Il est connu, pour la réalisation de tels revêtements, d'appliquer d'abord sur les parois du moule de polymérisation l'épaisseur voulue de produit réfractaire et/ou métallique dont on désire revêtir la pièce de matériau composite, puis de disposer ensuite sur le moule le matériau préimprégné, et enfin de réaliser la polymérisation sous dépression de façon conventionnelle, le transfert de la couche de produit réfractaire et/ou métallique sur la pièce de matériau composite obtenue s'effectuant alors au cours de la polymérisation.

Il est également connu, par le document DE—A—3 101 599, un procédé de revêtement de pièces en matériau composite. Ce procédé comprend les étapes successives qui consistent à enduire la face active du moule d'une dissolution d'un produit de collage dans un alcool volatil, à projeter jusqu'à refus le produit de revêtement en poudre au moyen d'un pistolet de projection, à mouler avant évaporation de l'alcool puis à polymériser le composé thermodurcissable, à démouler la pièce sur laquelle le produit de collage reste adhérant, puis à rincer avec le même alcool pour enlever le produit de collage.

Selon la présente invention le procédé de revêtement, par produit réfractaire et/ou métallique, de pièces en matériau composite comprend les étapes successives qui consistent à appliquer sur les parois d'un moule de polymérisation une couche d'un liant, à projeter sur les parois dudit moule au moins une couche dudit produit de revêtement, à positionner les couches de tissu de fibres et de résine à l'intérieur du moule, à procéder à la polymérisation sous dépression par chauffage, puis au démoulage, et il se caractérise en ce que le liant s'évapore ou se décompose à une température inférieure à celle de polymérisation et en ce qu'il est chargé d'éléments de la même matière que celle du produit de revêtement projeté ensuite sur les parois du moule.

Lors de l'opération de projection à chaud du matériau de revêtement, en particulier réfractaire, il s'effectue alors un frittage partiel du matériau projeté non seulement avec lui-même, mais aussi avec les particules prédéposées avec le liant ce qui permet l'obtention d'une grande continuité superficielle du revêtement final.

Le mode de projection du produit de revêtement, ainsi que l'évaporation du liant occasionnent dans le revêtement, du côté de la face interne de celui-ci, des discontinuités ou des cavités de dimensions très supérieures à celles des particules du produit, mais ces discontinuités sont pénétrées par la résine du matériau composite lors de son application et de son étuvage sous vide. Après durcissement, cette pénétration donne une excellente adhérence et produit même une incorporation du revêtement à la pièce finie. On a constaté que l'alcool polyvinylique, dont la molécule chimique est de forme sensiblement cubique, convient particulièrement bien comme liant selon l'invention pour des céramiques dont la forme moléculaire est elle-même sensiblement cubique.

On remarquera encore que le procédé selon la présente invention pour l'application d'un revêtement céramique, séparé en deux étapes comprenant le dépôt à froid, dans un liant, d'une sous-couche du produit de revêtement puis le dépôt à chaud de la matière de revêtement pure, permet la répartition sur le moule, quelle que soit sa forme, de n'importe quel type de matériau céramique. Sans cette sous-couche, cette répartition ne serait pas régulière avec certaines projections dites "froides" (au pistolet oxy-acétylénique par exemple) par opposition avec les projections dites "chaudes" (projection de plasma). Or il se trouve que l'utilité de ces projections dites "froides" est essentielle lorsque les moules utilisés ne sont pas métalliques, mais an matériaux plastiques ou composites et sont donc sensibles à la température.

Les revêtements de céramique trouvent de nombreuses applications, en particulier pour la protection anti-feu, la protection contre l'abrasion et l'usure, et la protection contre les chocs. Les matériaux de revêtement employés à cet effet peuvent être notamment du corindon bleu ou de l'alumine pure. Dans le cas particulier où la matière de revêtement projetée à chaud est du corindon bleu, la sous-couche préalablement déposée à froid est constituée par de l'alcool polyvinylique chargé par de la poudre d'alumine/titane et la proportion est de 0,5 à 5 parts en poids d'alumine/titane pour une part d'alcool polyvinylique.

Pour bien faire comprendre le procédé selon la présente invention on en décrira ci-après deux exemples de mise en oeuvre pour l'application sur une pièce en matériau composite fibres-résine, d'une couche de revêtement respectivement en métal et en matériau céramique.

Exemple 1

On nettoie un moule de polymérisation au méthyléthylcétone, puis on traite ce moule à 90°C avec un agent de démoulage non transférant appliqué au pinceau. Cet agent de démoulage, constitué par le produit commercialisé sous le nom "FREKOTE 44" par la société Brochier S.A., adhère chimiquement à la surface du moule sans se décomposer aux hautes températures de polymérisation, et facilite le démoulage de la pièce. Le moule étant revenu à la température ambiante, on applique sur ses parois à l'aide d'un chiffon propre et non pelucheux une fine couche régulière d'alcool polyvinylique, sous la forme du produit commercialisé sous le nom "LUCANOL UX 9552" par la Société Chmique de la Courneuve. Ce produit présentant la particularité de se décomposer aux températures de polymérisation, c'est la raison pour laquelle il est nécessaire d'utiliser l'agent de démoulage mentionné plus haut.

On projette alors à la flamme, en mouvement continu alterné au moyen d'une torche oxy-acétylénique, une couche d'aluminium d'épaisseur maximum de 0,05 millimètre, servant de couche d'accrochage pour le produit métallique à projeter constitué par du cuivre. On projette ensuite à la flamme, toujours au moyen d'une torche oxy-acétylénique, du cuivre en passes régulières et successives jusqu'à l'obtention de l'épaisseur désirée de cuivre à transférer. Lors de ces opérations de projection, il est important que la distance entre la surface du moule et la torche soit constante et de situe entre 100 et 200 mm. La dernière passe de projection est réalisée de façon à permettre l'obtention d'un maximum de rugosité.

On procède alors, de façon conventionnelle, au drapage des produits polymérisables sur le moule, ce qui comprend les opérations consistant:

—à positionner les plis de préimprégné sur le moule,

—à mettre un tissu de délaminage (tel que celui connu sous le nom "BLEEDER LEASE B"),

—à poser un filtre du type "VAC PAC perforé W 4500 F1",

—à positionner un tissu de pompage tel que celui connu sous le nom "AIR WEAVE SS",

—à mettre un tissu barrière du type connu "VAC PAL W 7500",

—à positionner un tissu de drainage "AIR WEAVE SS",

—et à mettre sous sac l'ensemble ainsi constitué, l'ensemble étant soumis à une aspiration pour le mettre en dépression.

On réalise alors la polymérisation en autoclave, l'opération de transfert de la couche de cuivre + aluminium projetée sur le moule vers le préimprégné s'effectue pendant la polymérisation. Il suffit ensuite d'effectuer le démoulage pour obtenir l'article en matériau composite fibres-résine revêtu de cuivre.

Exemple 2

Comme dans l'exemple 1, on nettoie le moule de polymérisation au méthyléthylcétone, puis on lui applique à 90°C le produit de démoulage non transférant ("FREKOTE 44").

Le moule étant revenu à température ambiante, on lui applique alors au pinceau une solution de poudre d'alumine/titane dans de l'alcool polyvinylique avec une proportion en poids d'une part d'alumine/titane pour une part d'alcool polyvinylique. L'alcool polyvinylique utilisé se présente sous la forme du produit commercialisé par la Société Chimique de la Courneuve sous le nom "LUCANOL UX 9552".

Après avoir porté le moule de polymérisation à une température de 70°C pendant environ 20 minutes, on procède à une projection à la flamme (au moyen d'un torche oxy-acétylénique) de corindon bleu en passes régulières et successives jusqu'à obtention de l'épaisseur désirée. La composition du corindon bleu projeté est la suivante:

| | |
|---|---|
| $Al_2O_3$ | 94,5% |
| $TiO_2$ | 3,3% |
| $SiO_2$ | 1% |
| $Fe_2O_3$ | 0,2% |
| CaO | 0,1% |
| MgO | 0,15% |
| $Na_2O$ | 0,02% |
| $Mn_3O_4$ | 0,05% |

Lors de cette projection, on fait en sorte que la distance entre la surface du moule et la torche soit constante et se situe entre 100 et 200 mm, et la denière passe est réalisée de façon à permettre l'obtention d'un maximum de rugosité.

On procède alors, de la même façon que décrite dans l'exemple 1, au drapage des produits polymérisables sur le moule, puis ou réalise la polymérisation en autoclave, et il suffit d'effectuer le démoulage pour obtenir l'article en matériau composite fibres-résine révêtu de céramique. On constate qu'on obtient ainsi un revêtement présentant une continuité superficielle de grande qualité due au frittage partiel qui a été réalisé du produit projeté avec les particules d'alumine/titane formant la sous-couches prédéposée avec le liant.

On comprendra que la description ci-dessus a été donnée à simple titre d'exemples, sans caractère limitatif, et que des adjonctions ou des modifications pouraient y être apportées sans sortir du cadre de la présente invention.

**Revendications**

1. Procédé de revêtement, par produit réfractaire et ou métallique, de pièces en matériau composite, comprenant les étapes successives qui consistent à appoliquer sur les parois d'une moule de polymérisation une couche d'un liant, à projeter sur les parois dudit moule au moins une couche dudit produit de revêtement, à positionner les couches de tissu de fibres et de résine à l'intérieur du moule, à procéder à la polymérisation sous dépression par chauffage, puis au démoulage, caractérisé en ce que le liant s'évapore ou se décompose à une température inférieure à celle de polymérisation et en ce qu'il est chargé d'éléments de la même matière que celle du produit de revêtement projeté ensuite sur les parois du moule.

2. Procédé selon la revendication 1 caractérisé en ce que, préalablement à l'application du liant sur le moule, on traite celui-ci avec un agent de démoulage non transférant et non décomposable à la température de polymérisation.

3. Procédé selon la revendication 2, caractérisé en ce que la matière de revêtement projetée à chaud est une céramique réfractaire et la charge du liant est constituée par une poudre ou dispersion d'une céramique analogue.

4. Procédé selon la revendication 3, caractérisé en ce que la proportion en masse de céramique dans le liant est de 0,5 à 5 parts pour une part de liant.

5. Procédé selon l'une quelconque des revendications 1 à 4, caractérisé en ce que le liant est constitué d'alcool polyvinylique.

6. Procédé selon la revendication 5, caractérisé en ce que l'alcool polyvinylique est chargé par de la poudre d'alumine/titane et en ce que la matière projetée à chaud est constituée de corindon bleu.

**Patentansprüche**

1. Verfahren zum Beschichten von Verbundwerkstoffen mit feuerfesten und/oder metallischen Stoffen, das aufeinanderfolgende Stufen umfaßt, die aus dem Aufspritzen mindestens einer Schicht des genannten Beschichtungsprodukts auf die Wände einer Polymerisationsform, aus dem Anbringen der Faserstoff- und Harzschichten im Innern der Form, aus der Vornahme der Polymerisation unter Vakuum durch Beheizen und dann aus dem Entformen bestehen, dadurch gekennzeichnet, daß das Bindemittel bei einer Temperatur verdampft oder abgebaut wird, die unter der der Polymerisation liegt, und daß es mit Bestandteilen des gleichen Stoffes wie dem des anschließend auf die Wände der Form gespritzten Beschichtungsprodukts angereichert ist.

2. Verfahren nach Anspruch 1, dadurch gekennzeichnet, daß vor dem Anbringen des Bindemittels an der Form diese mit einem Trennmittel behandelt wird, das bei Polymerisationstemperatur nicht übertragbar und nicht abbaubar ist.

3. Verfahren nach Anspruch 2, dadurch gekennzeichnet, daß der heiß aufgespritzte Beschichtungsstoff eine feuerfeste Keramik ist und der Füllstoff zum Bindemittel aus einem Pulver oder einer Dispersion einer entsprechenden Keramik besteht.

4. Verfahren nach Anspruch 3, dadurch gekennzeichnet, daß der Gewichtsanteil der Keramik im Bindemittel 0,5 bis 5 Teile auf einen Teil Bindemittel beträgt.

5. Verfahren nach einem der Ansprüche 1 bis 4, dadurch gekennzeichnet, daß das Bindemittel aus Polyvinylalkohol besteht.

6. Verfahren nach Anspruch 5, dadurch gekennzeichnet, daß der Polyvinylalkohol durch Aluminiumoxid-/Titanpulver angereichert ist und der heiß aufgespritzte Stoff aus blauem Korund besteht.

**Claims**

1. Method of coating items which consist of a composite material, using a refractory and/or metallic product, the method comprising successive stages which consist in applying to the walls of a polymerisation mould a coat of binder, in spraying onto the walls of the said mould at least one coat of the said surfacing product, in positioning the layers of woven fibre and resin materials inside the mould, in carrying out polymerisation under negative pressure and applying heating, then in removal from the mould, characterised in that the binder evaporates or decomposes at a temperature lower than the polymerisation temperature; and in that it is charged with elements of the same material as that of the surfacing product subsequently sprayed onto the walls of the mould.

2. Method according to Claim 1, characterised in that prior to applying the binder to the mould, the latter is treated with a mould-stripping agent which is non-transferable and non-decomposable at polymerisation temperature.

3. Method according to Claim 2, characterised in that the surfacing material which is sprayed while hot is a refractory ceramic material and in that the filler in the binder consists of a powder or a dispersion of a similar ceramic material.

4. Method according to Claim 3, characterised in that the proportion of ceramic material in the binder is 0.5 to 5 parts by mass to one part of binder.

5. Method according to any one of Claims 1 to 4, characterised in that the binder consists of polyvinyl alcohol.

6. Method according to Claim 5, characterised in that the polyvinyl alcohol is charged with the alumina/titanium powder filler and in that the substance which is sprayed hot consists of blue corundum.